Europäisches Patentamt

European Patent Office

Office européen des brevets

(19)

(11) **EP 0 493 135 B1**

(12) **EUROPEAN PATENT SPECIFICATION**

(45) Date of publication and mention
of the grant of the patent:
**04.12.1996 Bulletin 1996/49**

(51) Int Cl.6: **F02B 75/02**, **F02B 25/14**,
**F02B 41/04**, **F01L 9/04**

(21) Application number: **91312072.1**

(22) Date of filing: **27.12.1991**

(54) **Internal combustion engines**

Brennkraftmaschine

Moteur à combustion interne

(84) Designated Contracting States:
**DE ES FR GB IT**

(30) Priority: **27.12.1990 GB 9028092**
**11.03.1991 GB 9105100**

(43) Date of publication of application:
**01.07.1992 Bulletin 1992/27**

(73) Proprietor: **HALL, Keith Gordon**
**Maidenhead, Berkshire SL6 3PF (GB)**

(72) Inventor: **HALL, Keith Gordon**
**Maidenhead, Berkshire SL6 3PF (GB)**

(74) Representative:
**Selby-Lowndes, Guy Francis Charles et al**
**Moonrakers**
**Durfold Wood**
**Plaistow Billingshurst West Sussex RH14 0PL**
**(GB)**

(56) References cited:
**EP-A- 0 396 325**    **WO-A-87/03043**
**US-A- 4 386 587**    **US-A- 4 798 184**
**US-A- 4 945 869**

## Description

This invention relates to internal combustion engines together with their method of operation.

Existing internal combustion engines operate at low thermal efficiencies and the products of the fuel burnt in them, exhaust gases, contain environmentally harmful components. The present invention provides an internal combustion engine with increased efficiency and also a lower level of environmentally harmful exhaust emissions. The engines according to the invention will run on lowly refined, broadcut, fuels.

The Otto and Diesel engine cycles together with associated means of load control have been used, principally unchanged, for over a century. They are symmetrical cycles (the compression ratio equals the expansion ratio) and hence have low thermodynamic efficiencies. Half of the combustion energy is directly exhausted, heating the environment and providing no useful work.

As engine load is reduced the efficiency falls even further. At one sixth load the efficiency is halved. The Diesel engine, although avoiding intake throttling pumping loses, suffers high internal friction at part load as a result of the high compression ratio. The work ratio, that is the ratio of the compression work to expansion work, is a useful means of determining the internal efficiency of the engine.

The Diesel Cycle achieves a higher efficiency than the spark ignition Otto engine as it operates with a higher overall pressure ratio, creating severe noise, vibration and harshness (NVH) concerns as a result.

Both types of engine modulate the charge load in order to vary output. In the Diesel engine the fuel quantity per cycle is varied while the volume and density of charge air remains substantially constant. Hence, modulation is effected by variable air/fuel ratio. In comparison the Otto engine modulates the air density (throttling) while the charge air volume and air/fuel ratio remains substantially constant. Previous work by the inventor relates to modulation of the cycle frequency while the load remains substantially constant.

In terms of exhaust emissions the Otto and Diesel Cycles show an inherent conflict between efficiency and low nitrogen oxide ($NO_x$) emissions. High expansion ratios are required for high efficiency but require high peak combustion temperatures which increase the $NO_x$ emissions. Carbon monoxide (CO), carbon dioxide ($CO_2$) and hydrocarbon emissions arise from the combustion of hydrocarbon fuels. Carbon monoxide and hydrocarbon emissions are the consequence of incomplete fuel combustion and may be reduced by improving combustion control in the engine and the use of weak air/fuel ratios. Hydrocarbon emissions increase at low combustion temperatures. Carbon dioxide emission is directly related to the amount of hydrocarbon fuel consumed and can only be reduced by increasing engine efficiency.

The proposed strategy for the design of internal combustion engines and gas generators with lowered emissions of environmentally harmful products is as follows:

To control more precisely pollutant production and harshness in the combustion process and to improve the refinery efficiency
thermodynamic efficiency
combustion efficiency
internal efficiency
modulation efficiency
braking efficiency

Fuel Refinement
a. To use a lowly refined wide cut fuel for increased overall efficiency by minimising engine octane requirement.

Thermodynamic Cycle
a. To adopt an assymetric thermodynamic cycle in which a low compression ratio is combined with a high expansion ratio for increased ideal thermal efficiency.

Combustion

a. To minimise octane requirement by late admission of the fuel into the hot cylinder.
b. To improve control of the combustion process by initiating combustion in a zone of low turbulence.
c. To improve control of the combustion process by simplifying the geometry of turbulence-generation.
d. To increase the speed of combustion and the rate of expansion so that the rate of pressure rise (harshness) is not increased.
e. To segregate more clearly each thermodynamic phase to achieve better optimumisation.
f. To moderate the temperature extremes across the combustion chamber.
g. To simplify the geometry of fuel admission so that stratification is variable in a controlled manner.

Internal Losses

a. To optimise the work ratio by the combination of a low compression ratio with a high expansion ratio and hence optimise internal efficiency.
b. To maximise the use of each engine stroke.
c. To minimise the mechanical complexity and replace sliding contact by rolling contact where possible.

Modulation

a. To introduce mass charge load control by modulating the volume of trapped charge.
b. To introduce charge density load control by preheating the charge air, preferably by regenerative means.

c. To introduce air/fuel ratio load control by modulating the fuel mass, possibly in combination with stratified charge.

d. To minimise pumping losses by eliminating intake throttling.

e. To introduce frequency control by using cylinder cut-out techniques.

f. To minimise or eliminate idling speed.

g. To introduce torque boosting to minimise the number of transmission ratios.

h. To introduce regenerative braking.

i. To improve response.

Emmissions

a. To reduce carbon dioxide emission by improved total cycle efficiency.

b. To reduce emissions of nitrogen oxides by using lower initial cycle temperature and low compression ratio to moderate the peak cycle temperature.

c. To reduce hydrocarbon emissions by higher light load temperatures and higher cylinder wall temperatures.

d. To reduce hydrocarbon and carbon monoxide and hydrocarbon emissions by lean combustion, possibly aided by stratification.

e. To reduce warm-up emmissions by use of integral exhaust port catalysts, close coupling being aided by reduced exhaust gas temperatures.

f. To reduce NVH emissions by adopting engine mechanisms with near perfect balance.

WO-A-87/03 043 describes a two-stroke internal combustion engine designed for use in conjunction with a supercharger and in which the compression and expansion strokes have asymmetric swept volumes. In this engine the intake valve may be opened during a period of increase in the volume of the cylinder to improve operation at low power.

The present invention provides an internal combustion engine in which the refinery, thermodynamic, combustion, dynamic, combustion, internal modulation, and/or braking efficiency is improved.

According to the present invention there is provided a two-stroke internal combustion engine operating according to the thermodynamic sequence of induction, compression, combustion and exhaust, within a cylinder whose volume is controlled by a reciprocating piston and in which the compression stroke and expansion stroke have asymmetric swept volumes, characterised in that the start of induction takes place during a period of decrease in the volume of the cylinder.

In order that the invention may be clearly understood it will now be described with reference to the accompanying drawings in which:

Figure 1 is a graph showing the relationship between the pressure and the volume during the thermodynamic cycle of an internal combustion engine,

Figure 2 is a graph showing the relationship between the thermal efficiency and the load for a series of internal internal combustion engines,

Figure 3 is a schematic drawing of a combustion chamber layout using annular inlet and exhaust valves with a stratified charge,

Figure 4 is a schematic drawing of an alternative combustion chamber layout using annular inlet and exhaust valves with a stratified charge,

Figure 5 is a schematic arrangement of a multi-cylinder engine according to the invention using an improved means of converting linear to rotary motion, and

Figure 6 is a further schematic arrangement of the multi-cylinder engine shown in Figure 5, and

Figure 7 is a schematic arrangement of an engine according to the invention using a parallelogram linkage.

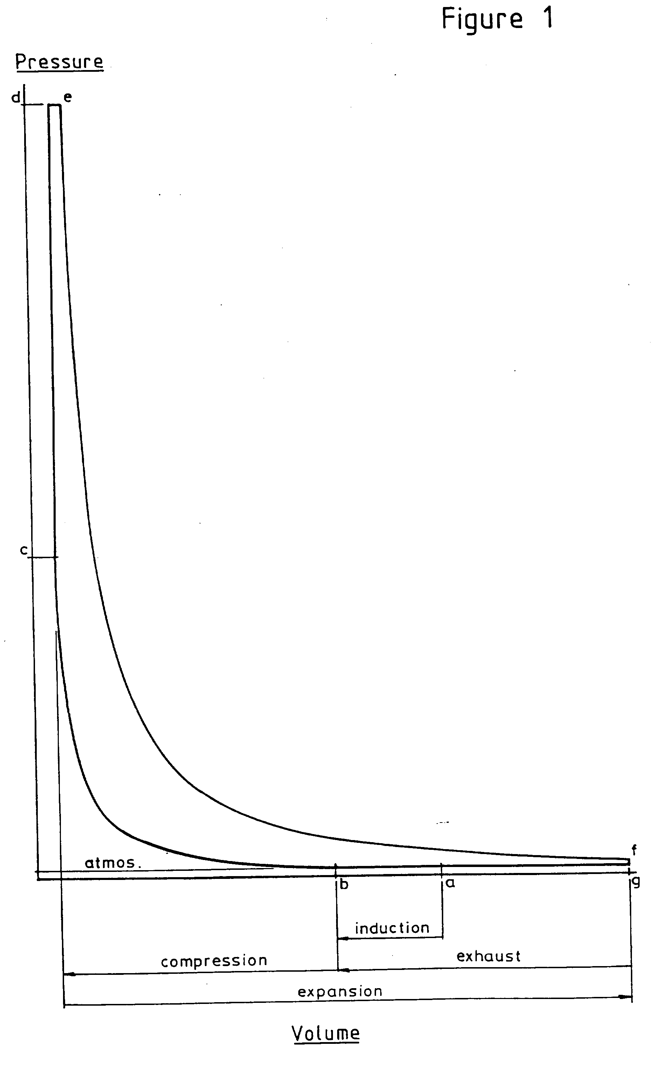

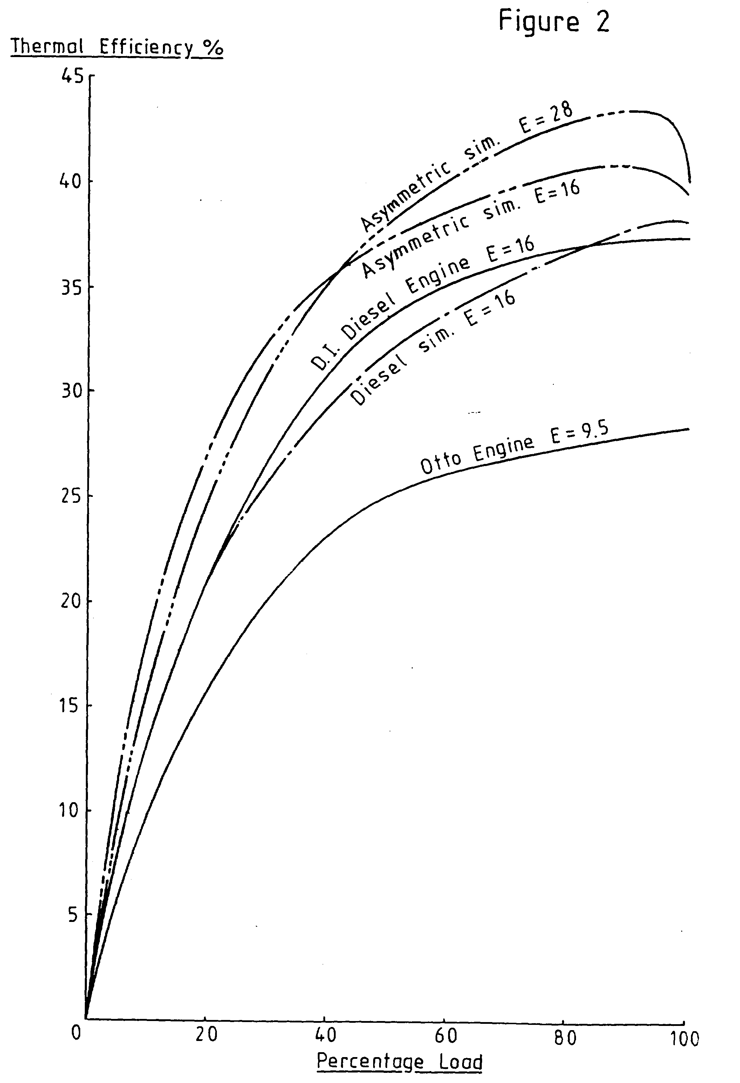

The typical pressure/volume characteristics of an internal combustion engine employing compression in the power cylinder will be described with reference to Figure 1. Induction occurs between points a - b, compression between points b - c, near constant volume combustion between c - d and constant pressure combustion between d - e. Expansion occurs between e - f and exhaust between f - g and g - b. Figure 2 shows the computed efficiency of the asymmetric cycle over its load range compared to the Diesel cycle and the Otto cycle using similar component efficiencies. The lowest efficiency curve shown represents actual engine test results from a carburetted two valve per cylinder engine with a 9.5:1 expansion ratio. The next solid line represents engine test results from a direct inject diesel engine with an expansion ratio E of 16:1. The simple computer simulation of the Diesel cycle with a 16:1 expansion ratio shows a close correlation. The model assumes constant component and combustion efficiencies across the range, whereas these will vary in practice as shown by the actual efficiency curve. The Diesel cycle was then remodelled for the same 16:1 expansion ratio but with a reduced compression ratio to achieve the asymmetric cycle according to Figure 1. The efficiency peaks at over 40 per cent with the improvement maintained across the load range. A further increase in expansion ratio, as shown by E=28, shows further improvement at high loads but at some expense to low load efficiency. While the expansion ratio remained fixed for the simulations, the compression ratio was optimised for each condition. The optimum brake thermal efficiency occurs at a midway compression ratio between the optimum compression ratio defined by the ideal efficiency and the optimum compression ratio defined by the condition of optimum work ratio. Component efficiencies are based on work areas above the atmospheric pressure datum.

The asymmetric cycle is not new. Variable valve timing has been employed to delay inlet valve closing in the four stroke engine which allows some of the charge to be pumped back into the inlet manifold in order to trap less charge and so avoid the pumping losses associated with intake throttling. Sophisticated technology is required to control the phasing of the dynamic highly stressed valve components.

In comparison, the simple ported two-stroke engine only requires the exhaust port to lead the transfer port. This results in a low expansion ratio and low efficiency compounded by charge loss into the exhaust port.

The simplest form of asymmetric cycle, according to Figure 1, requires two piston strokes to complete the cycle with expansion predominantly occupying one of the strokes. Hence, induction, compression and exhaust occupy the other stroke. This requires that induction is achieved against a decreasing cylinder volume, that the rate of incoming flow is greater than the rate of volume decrease. A pressure head is required to achieve the differential rate. Either sub-atmospheric cylinder depression has to be created at the end of the exhaust phase, or the charge pressure has to be raised externally, or both. Hence, multiple stages of compression may be used.

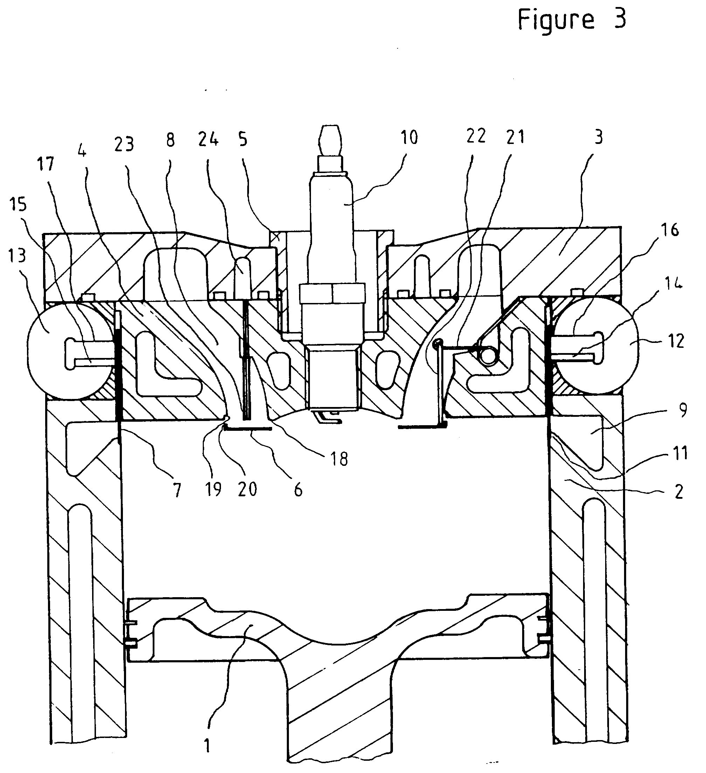

The asymmetric two stroke engine, see Figure 3, consists of a piston 1 moving reciprocally in a cylinder 2. The piston 1 is mechanically connected in known manner to a drive shaft, not shown. Cylinder 2 is capped by a cylinder head comprising an upper part 3 and lower part 4 clamped together by a hollow bolt 5. Annular inlet and exhaust valves 6 and 7 together with inlet and exhaust ports 8 and 9 respectively are arranged broadly in concentric fashion around a spark plug 10. The exhaust valve 7 is sealed on its lower outer edge in the closed position by an exhaust seat 11, aided by valve springs (not shown). The exhaust valve 7 is modulated by an actuator. Solenoids, 12 and 13, are shown acting on valve plates 14 and 15 respectively.

Magnetic forces of attraction are created on solenoid faces 16 and 17 when an electric current is passed through the windings of the solenoids 12 and 13. The magnetic force of attraction causes the exhaust valve 7 to lift and uncover the exhaust port 9. The electric current passed through the solenoids 12 and 13 may be varied in timing and duration in order to modulate the exhaust period according to engine operating conditions. At exhaust valve opening a positive pressure wave leaves the cylinder, travels to the expansion chamber (or tail pipe) and is reflected back to the cylinder as a negative pulse. Hence, the exhaust valve modulation may be used to control the timing of a negative pressure pulse in the cylinder during the scavange stroke.

The annular inlet valve 6 comprises an inner seat 18 and outer seat 19 which may be masked by a lip 20 or similar device to control differentially flow across the seats, to assist, for example phase segregation or charge stratification. A plurality of pretension springs 21 act on the inlet valve via legs 22. The annular inlet port 8 may contain charge at atmospheric pressure or pressurized charge from an external source. The inlet valve 6 may have supports 23 to limit maximum stress due to combustion pressure and the supports may also provide fuel admission means from a fuel rail 24. They may be shaped as guide vanes to generate swirl in the combustion chamber. The inlet valve 6 is designed to open (downwards) under the influence of negative cylinder pressure. Hence, modulation of the exhaust valve 7 may be used to control the charge filling process and therefore the attract volume of charge and the effective compression ratio. Intake throttling may be eliminated and exhaust valve modulation used as a means of load control. The wall thickness of the annular exhaust valve 7 may be selected such that the hoop stress generated by the combustion pressure increases the valve diameter and effects a seal against the cylinder wall.

Further controls may be exercised in order to modulate engine load or engine output. In a second means of load modulation the air/fuel ratio may be varied as in the Diesel engine. The annular inlet valve 6 is particularly appropriate in producing a stratified charge with, for example, a rich central mixture being admitted across the inner valve seat 18 and a weak mixture across the outer valve seat 19. In a third means of load modulation the charge density may be varied as in the Otto engine, but not by means of intake throttling, rather by regenerative heating from the exhaust. A heat exchanger may be used with control means to vary the proportion of charge heating according to the required load. Finally, at light load conditions performance may be modulated by control of cycle frequency. Cylinders may be cut out in order to operate them at higher load, they for example fire every four or six strokes rather than every two.

An alternative method of operating the exhaust valve may use a mechanical linkage in place of the solenoids. This may be particularly suitable for high speed high power engines. Such engines may be spark ignition or compression ignition types.

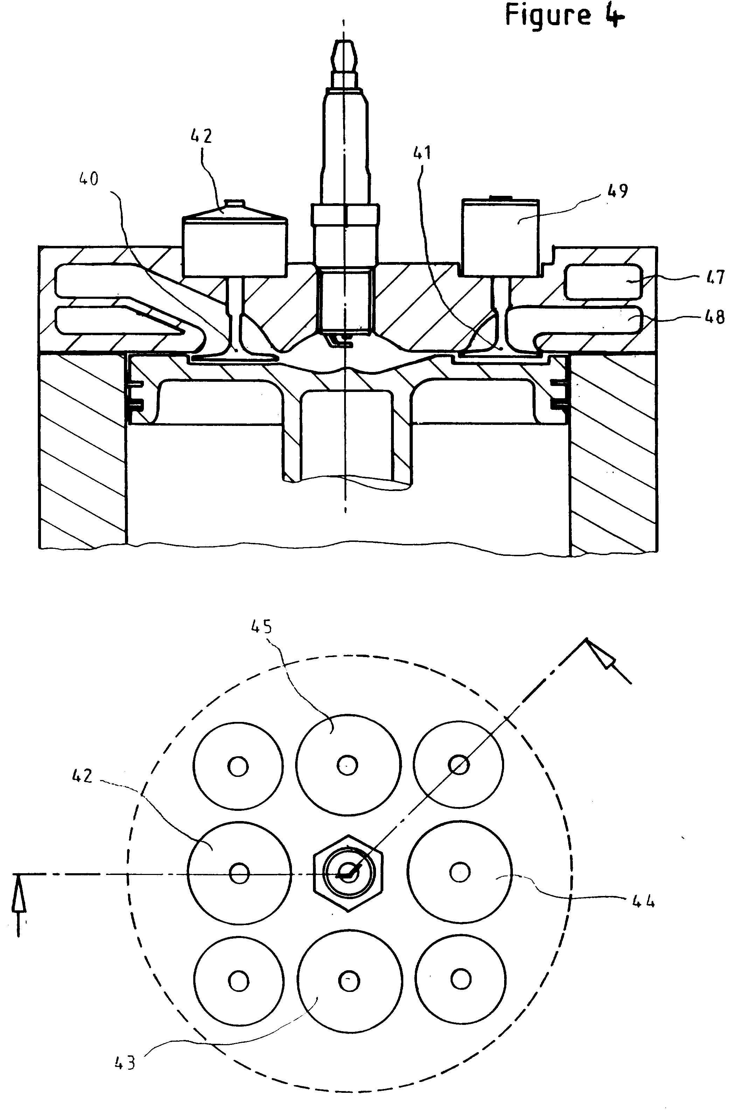

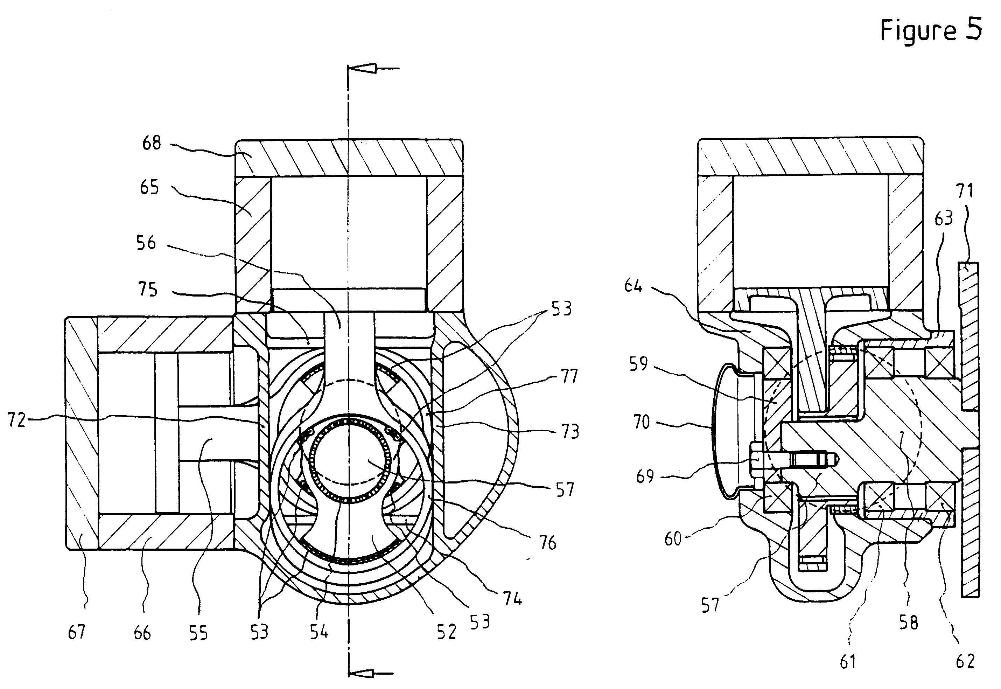

An alternative cylinder head arrangement, see Figure 4, uses a number of inlet valves 40 and exhaust valves 41 in annular formation. A differential area may be employed on the inlet valves to impart a normally closed position on the valve by means of charge pressure in place of valve springs. This is achieved using diaphragms 42, 43, 44 and 45 of larger diameter than the valve seat port 46. A heat exchange process between an inlet passage 47 and an exhaust passage 48 may be used to raise intake temperature. A valve means may be introduced to modulate the heat exchange process. The exhaust valves may be operated in the conventional manner using return spring 49. In a further embodiment, Figure 5 shows the detailed construction of a positive displacement machine in a V-twin configuration. A stepped disc pair 52 converts linear to rotary motion in both cylinder lines. The disc is shown with circumferential material removed to reduce weight and frictional area.

Inner and outer roller element bearings 53, 54 respectively are integrated into the stepped disc contact surfaces to reduce further the friction. The mechanism comprises reciprocating members 55 and 56 attached via the stepped disc to a crank pin 57 of rotating members 58 and 59 which supported in bearings 60, 61 and 62 located in a sleeve 63 and a crank case 64 which supports cylinders 65 and 66 together with cylinder heads 67 and 68. Assembly is facilitated by the use of a split crank shaft retained by a bolt 69, the sleeve 63 and removeable cylinders 65 and 66. A plug 70 seals the crank case 64 and the crank shaft supports a flywheel 71 which counterbalances the inertia forces acting at the crank pin to achieve a complete balance of forces. A small couple is unresolved.

Normally, the disc eccentricity is equal to the crank throw. Hence, the cr'ank throw is equal to only one quarter of the stroke. The motion of the disc is one of planetary rotation about the crank pin at equal speed in the opposite direction. A pair of reciprocating members are required in order to share the forces between the cylinder lines and avoid excessive side forces being generated that would otherwise jam the mechanism. In a simple line mechanism the side force is proportional to the tangent of the crank shaft angle. When each disc is constrained to motion along each cylinder line, simple harmonic motion is produced and the recipricator, connecting member and rotary member are correctly phased.

Phasing constraint is provided by way of example by reciprocator yoke guides 72, 73, 74 and 75. Prior art Poceedings of the Institution of Mechanical Engineers, A. Automobile Division, Volume 188, nº 33, 1974, London, GB, pages 505-597; A.J.S. Baker & M.E. Cross "Four cylinder four-cycle engine with two reciprocating components, used double ended cylinders in the two lines to form an 'X' configuration and provide the necessary phasing constraint. However, the recipricator is then so well constrained that the mechanism has little capability to accomodate out of tolerance conditions.

In this proposal the phasing constraint is applied about the disc axis, to near circular recipricator yokes 76, 77. Hence, the reciprocator can swivel about the axis of the stepped disc to accomodate, for example, a misaligned cylinder. Rolling element bearings may also be used to locate the yoke in its guide.

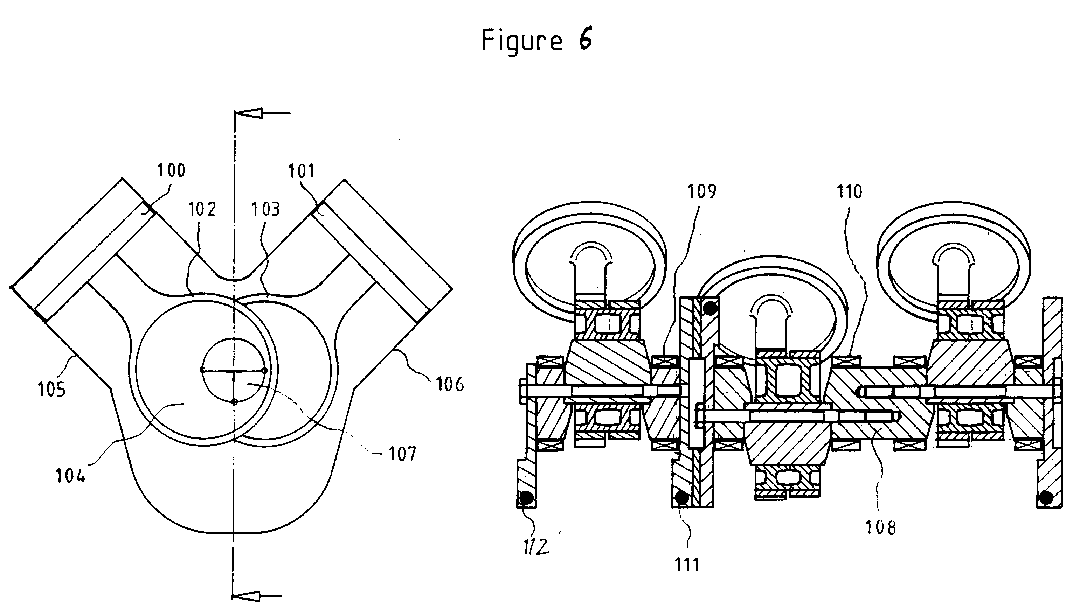

In a further embodiment Figure 6 is used to demonstrate various power modulation scenarios within an integrated solution. Pistons, 100, 101 are attached to yokes 102, 103 respectively. Both yokes are attached to a connecting disc pair 104. This may be constructed of two or more parts bolted together or a single piece. Ideally the cylinders 105, 106 are angled in a 'V' formation at 90° to each other. A crank pin 107 is part of a crankshaft 108 which may comprise a number of parts bolted together according to the number of cylinder banks to increase crank shaft stiffness and facilitate assembly. A section is shown through a V6 engine. The throw of the crankshaft is normally equal to the throw of the connecting disc 104. The connecting disc 104 rotates about the crank pin 107 at a constant angular velocity in the opposite direction to the crank shaft 108. Hence, the yokes 102 and 103 impart a simple harmonic reciprocatory motion to the pistons along the axis of the cylinder centre line. There is no piston side force component and the engine runs with constant angular inertia. Primary forces are perfectly balanced when the 'V' angle is 90° according to the formula:

$$\sin^2\theta + \cos^2\theta = 1$$

where $\theta$ equals crank shaft angle - degrees. Hence, a constant centrifugal force is generated in the direction of the crank pin equal to the mass of one piston/disc assembly. This may be counterbalanced by crankshaft counterweights of half the assembly mass each side of the crank pin on the opposite side of the crankshaft. Higher order forces are eliminated. A small couple results from the offset of each cylinder centre-line. In a 90° V4 configuration the second pair of cylinders provide perfect balance for primary forces leaving a primary couple to be resolved by counterweights either end of the engine. The aim is to minimise light load running and provide a wider range of power control options than either the Otto engine (fixed air/fuel ratio) or the Diesel engine (fixed charge density). The principle options made available to match power output to driver demands include variable engine capacity, variable charge density, variable charge volume, variable air/fuel ratio and variable compressor displacement.

In the V6 engine shown the inlet and exhaust valve timing is independently variable (not illustrated). This enables each cylinder to function as either a compressor or an expander. In the unsealed cylinder mode the piston functions simply as a counterweight. Hence inefficient light load operation may be avoided by running fewer power cylinders and more compressor cylinders or cutting out some cylinders. The excess compressed air may be stored and subsequently used. The section of the V6 engine shows in principle a V-twin engine 109 connected to a V4 engine 110 via a clutch 111. For continuous full load operation the V-twin unit functions as a compressor and the V4 unit functions as a power unit driving the compressor via the clutch. The V-twin is balanced as an independent unit, black dots 112 denoting counterweights, and the V4 as another independent unit. At part load the clutch may be disengaged and the V-twin shut down. One or more of the V4 cylinders may take up the compression function as required. At light load the V4 unit may be shut down and compression and power functions carried out by the V-twin. Hence, by variable valve timing, performance may be varied from six compressor cylinders (regenerative braking) to six power cylinders (temporary performance boost) and any combination between.

A single compressed air receiver may be used or multiple receivers, for example a low pressure one for powered operation and a high pressure one for regenerative braking. Charge heating via an intake/exhaust heat exchanger may be used on the high pressure receiver only, or on any of the other combinations or not at all. An intelligent control system would determine an optimum operating regime compatible with the driver input demands. The connecting disc mechanism may also be applied to conventional engines.

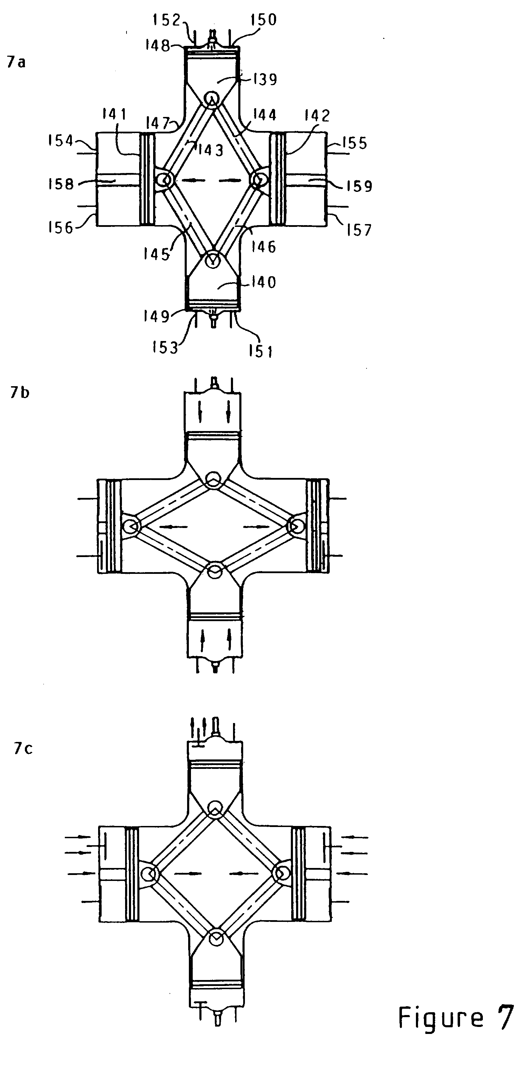

A further embodiment of the engine according to the invention, see Figure 7, has opposing expander and compressor pistons connected by a parallelogram linkage. Opposing expander pistons 139 and 140 power opposing compressor pistons 141 and 142 through parallelogram links 143, 144, 145 and 146 enclosed in a cylinder housing 147. Each expander piston has an expansion chamber 148 and 149 with inlet valves 150 and 151 together with exhaust valves 152 and 153. The compressor pistons 141 and 142 are housed in cylinders having inlet valves 154 and 155 and together with discharge valves 156 and 157.

In the first phase of the compression cycle, see Figure 7a, the intake mixture has been admitted to both the expander chambers 148 and 149 through the inlet valves 150 and 151. Combustion and expansion have started in the expander chambers so that movement of the pistons 139 and 140 through the linkage 143, 144, 145 and 146 causes the compressor pistons 141 and 142 to start a compression cycle.

When compression is complete, see Figure 7b, the compressed air is released through discharge valves 156 and 157. The pistons 141 and 142 return, see Figure 7c, due to compressed air pressure acting on piston rods 158 and 159. Inlet valves 154 and 155 open for the compressor induction phase. The motion is transmitted to the expander pistons 139 and 140 by the linkage 143, 144, 145 and 146 so that the exhaust gases are discharged through the valves 152 and 153.

## Claims

1. A two-stroke internal combustion engine operating according to the thermodynamic sequence of induction, compression, combustion and exhaust, within a cylinder whose volume is controlled by a reciprocating piston and in which the compression stroke and expansion stroke have asymmetric swept volumes, CHARACTERISED IN THAT the start of induction takes place during a period of decrease in the volume of the cylinder.

2. A two-stroke internal combustion engine according to claim 1, characterised in that expansion predominantly occupies one of the strokes.

3. A two-stroke internal combustion engine according to claim 1, characterised in that annular inlet and exhaust valves (6, 7) are used arranged in concentric fashion around a spark plug (10).

4. A two-stroke internal combustion engine according to claim 3, characterised in that the inlet valve (6) comprises an inner seat (18) and an outer seat (19) which are masked by a lip (20) to control differentially flow across the seats.

5. A two-stroke internal combustion engine according to claim 1, characterised in that the wall thickness of the exhaust valve (7) is selected that the hoop stress generated by the combustion pressure increases the valve diameter and effects a seal against the cylinder wall.

6. A two-stroke internal combustion engine according to claim 3, characterised in that the inlet valve (6) produces a stratified charge.

7. A two-stroke internal combustion engine according to claim 1, characterised in that the engine comprises a plurality of cylinders and cylinders may be cut out in order to operate them at a higher load.

8. A two-stroke internal combustion engine according to claim 1, characterised in that constraint of a piston yoke (76, 77) is provided by reciprocator yoke guides (72, 73, 74 and 75).

## Patentansprüche

1. Eine Zweitakt-Brennkraftmaschine, die im Einklang mit der thermodynamischen Folge von Ansaugung, Kompression, Verbrennung und Ausstoß arbeitet, und zwar innerhalb eines Zylinders, dessen Innenraum durch einen Hubkolben geregelt wird und in dem der Kompressionshub und der Expansionshub asymmetrische Hubräume bedingen, DADURCH GEKENNZEICHNET, DASS der Beginn der Ansaugung während einer Zeitspanne stattfindet, in der der Innenraum des Zylinders abnimmt.

2. Eine Zweitakt-Brennkraftmaschine nach Anspruch 1, dadurch gekennzeichnet, daß Expansion vorwiegend einen der Hübe beansprucht.

3. Eine Zweitakt-Brennkraftmaschine nach Anspruch 1, dadurch gekennzeichnet, daß ringförmige Einlaß- und Auslaßventile (6, 7) in konzentrischer Anordnung rings um eine Zündkerze (10) vorgesehen sind.

**4.** Eine Zweitakt-Brennkraftmaschine nach Anspruch 3, dadurch gekennzeichnet, daß das Einlaßventil (6) einen inneren Sitz (18) und einen äußeren Sitz (19) aufweist, die zwecks unterschiedlicher Regelung der über die Sitze verlaufenden Strömung durch eine Lippe (20) abgedeckt sind.

**5.** Eine Zweitakt-Brennkraftmaschine nach Anspruch 1, dadurch gekennzeichnet, daß die Wandstärke des Auslaßventils (7) so gewählt ist, daß die durch den Verbrennungsdruck erzeugte Umfangsspannung den Ventildurchmesser vergrößert und Abdichtung gegen die Zylinderwand bewirkt.

**6.** Eine Zweitakt-Brennkraftmaschine nach Anspruch 3, dadurch gekennzeichnet, daß das Einlaßventil (6) eine geschichtete Ladung bewirkt.

**7.** Eine Zweitakt-Brennkraftmaschine nach Anspruch 1, dadurch gekennzeichnet, daß die Maschine eine Mehrzahl von Zylindern umfaßt und Zylinder ausgeschaltet werden können, um sie mit einer höheren Belastung zu betreiben.

**8.** Eine Zweitakt-Brennkraftmaschine nach Anspruch 1, dadurch gekennzeichnet, daß Einschränkung der Bewegungsfreiheit eines Kolbenbügels (76, 77) durch Hubkolbenführungen (72, 73, 74 und 75) bedingt wird.

**Revendications**

**1.** Moteur à combustion interne à deux temps fonctionnant suivant la séquence thermodynamique d'admission, compression, combustion et échappement, dans un cylindre dont le volume est déterminé par un piston à mouvement alternatif et dans lequel la course de compression et la course de détente ont des volumes balayés asymétriques, CARACTERISE EN CE QUE le début de l'admission a lieu pendant une période de diminution du volume du cylindre.

**2.** Moteur à combustion interne à deux temps selon la revendication 1, caractérisé en ce que la détente occupe l'un des temps de manière prédominante.

**3.** Moteur à combustion interne à deux temps selon la revendication 1, caractérisé en ce que des soupapes d'admission et d'échappement annulaires (6, 7) sont utilisées et disposées de manière concentrique autour d'une bougie d'allumage (10).

**4.** Moteur à combustion interne à deux temps selon la revendication 3, caractérisé en ce que la soupape d'admission (6) comprend un siège intérieur (18) et un siège extérieur (19) qui sont masqués par une lèvre (20) pour assurer de manière différentielle la régulation de l'écoulement en travers des sièges.

**5.** Moteur à combustion interne à deux temps selon la revendication 1, caractérisé en ce que l'épaisseur de paroi de la soupape d'échappement (7) est sélectionnée de telle sorte que l'effort de flexion produit par la pression de combustion augmente le diamètre de la soupape et assure l'étanchéité contre la paroi du cylindre.

**6.** Moteur à combustion interne à deux temps selon la revendication 3, caractérisé en ce que la soupape d'admission (6) produit une charge stratifiée.

**7.** Moteur à combustion interne à deux temps selon la revendication 1, caractérisé en ce que le moteur comprend une pluralité de cylindres et en ce que des cylindres peuvent être isolés pour fonctionner à une charge plus élevée.

**8.** Moteur à combustion interne à deux temps selon la revendication 1, caractérisé en ce que le guidage d'un collier de piston (76, 77) est assuré par des guides de colliers à mouvement alternatif (72, 73, 74 et 75).

# Figure 1

Figure 2

Thermal Efficiency %

Asymmetric sim. E = 28
Asymmetric sim. E = 16
D.I. Diesel Engine E = 16
Diesel sim. E = 16
Otto Engine E = 9.5

Percentage Load

Figure 3

Figure 4

Figure 5

Figure 6

Figure 7